# EUROPEAN PATENT SPECIFICATION

(11) **EP 2 351 681 B1**
(45) Date of publication and mention of the grant of the patent: **25.02.2015**
(21) Application number: 10805758.9
(22) Date of filing: 26.11.2010
(51) Int. Cl.: B62D 5/04, F16C 19/06, F16C 19/26, F16C 23/08, F16C 33/66, F16C 35/073, B62D 1/16, F16H 57/04, F16C 19/52

(54) **MOTORIZED POWER STEERING DEVICE**
ELEKTRISCHE SERVOLENKVORRICHTUNG
DISPOSITIF DE DIRECTION ELECTRIQUE

(30) Priority: 27.11.2009 JP 2009269866; 13.07.2010 JP 2010158381
(43) Date of publication of application: 03.08.2011
(73) Proprietor: NSK Ltd., Tokyo 141-8560 (JP)
(72) Inventor: AIZAWA, Toshiyuki, Gunma 3710853 (JP); YAMAMOTO, Takeshi, Gunma 3710853 (JP)
(74) Representative: Moreland, David
(86) International application number: PCT/JP2010/071145
(87) International publication number: WO 2011/065491

(56) References cited:
- EP-A1- 1 571 067
- WO-A1-2006/057414
- WO-A1-2006/120984
- JP-A- 2001 315 650
- JP-A- 2006 342 844
- JP-A- 2007 161 082
- JP-A- 2007 210 588
- JP-A- 2007 255 665
- JP-A- 2008 001 323

## Description

### TECHNICAL FIELD

The present invention relates to an electric power steering device which is built-in to the steering device of an automobile, and achieves a reduction in the force required for the driver to operate the steering wheel, by utilizing an electric motor as an auxiliary force.

### BACKGROUND ART

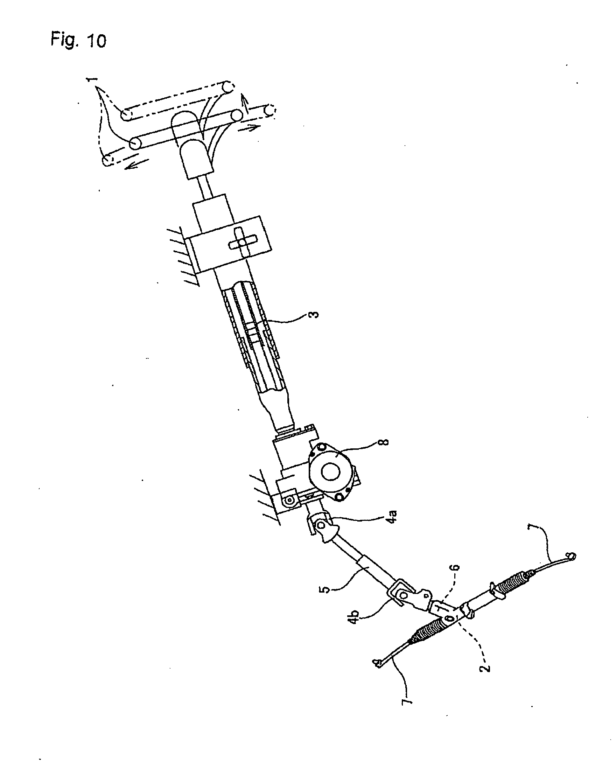

The steering device of an automobile, by means of the construction shown in FIG. 10, transmits the movement of a steering wheel 1 to a steering gear unit 2. This movement of the steering wheel 1 is transmitted to an input shaft 6 of the steering gear unit 2 via a steering shaft 3, a universal joint 4a, an intermediate shaft 5, and a universal joint 4b. As a result, the steering gear unit 2 pushes and pulls a left and right pair of tie rods 7, and imparts a desired steering angle to the steered vehicle wheels. Furthermore, in the construction shown in FIG. 10, an electric power steering device is built-in which, according to the force applied to the steering wheel 1 by the driver, imparts an auxiliary force (assistance force) to the steering shaft 3 by way of an electric motor 8.

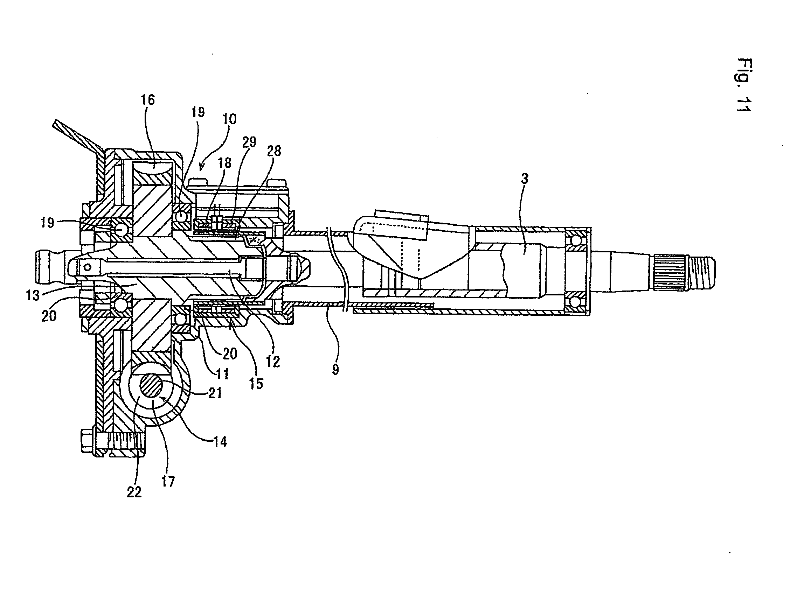

An electric power steering device to which an electric motor 8 is built-in is well-known. As one example of an electric power steering device of such a construction, the construction disclosed in Patent Document 1 is shown in FIG. 11. This electric power steering device is provided with a steering shaft 3 that fixes a steering wheel 1 (refer to FIG. 10) to a rear end portion (right end portion of FIG. 11), a steering column 9 through which the steering shaft 3 is inserted, and a steering force auxiliary device (assistance device) 10 for imparting an auxiliary force to the steering shaft 3.

In regard to the cylindrical steering column 9 through which the steering shaft 3 is inserted, the front end portion (left end portion of FIG. 11) is fixedly coupled to the rear end portion of a housing 11 that constitutes the steering force auxiliary device 10. Furthermore, the front end portion of the steering shaft 3 is, via a torsion bar 12 that constitutes the steering force auxiliary device 10, connected to an output shaft 13 that also constitutes the steering force auxiliary device 10. Moreover , at the front end portion of the output shaft 13, the part that protrudes from the front end face of the housing 11 is connected to the rear end portion of the intermediate shaft 5 (refer to FIG. 10) via the universal joint 4a.

The steering force auxiliary device 10 is provided with; the steering shaft 3 serving as an input shaft, the output shaft 13, the torsion bar 12, the electric motor 8 (refer to FIG. 10), a worm reducer 14, a torque sensor 15, and a control device (not shown in the figure). Among these, the worm reducer 14 is provided with; a worm wheel 16 that is externally fitted onto an intermediate portion of the output shaft 13, and a worm 17 provided with worm teeth 22 on an axial direction intermediate portion, and that is rotationally driven by the electric motor 8, and is configured such that the worm wheel 16 and the worm teeth 22 are meshed inside the housing 11. The torque sensor 15 is provided with torque detecting concave and convex portions 28, a torque detecting coil 29, and a sleeve 18. The torque detecting concave and convex portions 28 are formed on the rear end portion of the outer peripheral face of the output shaft 13 alternately with respect to the circumferential direction and at equal intervals, and these constitute concave portions and convex portions that extend in the axial direction. The torque detecting coil 29 is supportingly fixed to the housing 11 in a state where it is arranged around the periphery of the torque detecting concave and convex portions 28. Furthermore, the sleeve 18 is fixedly coupled to the front end portion of the steering shaft 3 in a state where it is arranged in a position sandwiched between the outer peripheral face of the torque detecting concave and convex portions 28 and the inner peripheral face of the torque detecting coil 29. Within the sleeve 18, on the section facing the inner peripheral face of the torque detecting coil 29, a plurality of detection window apertures (not shown in the figure) are formed at predetermined intervals with respect to the circumferential direction. The torque sensor 15 with such a configuration, detects the direction and the magnitude of the torque applied from the steering wheel 1 to the steering shaft 3, and outputs a signal (detection signal) that represents the detected value, to the control device.

That is to say, when torque is applied to the steering shaft 3, the torsion bar 12 that connects the steering shaft 3 and the output shaft 13 elastically deforms such that it twists depending on the torque that is transmitted between the steering shaft 3 and the output shaft 13. Then, accompanying this elastic deformation, the steering shaft 3 and the output shaft 13 relatively rotate. There is a correlation between the relative rotation amount (relative displacement amount) between the steering shaft 3 and the output shaft 13, and the direction and the magnitude of the torque. Consequently, the torque sensor 15 detects the direction and the magnitude of the torque applied to the steering shaft 3, based on this relative rotation amount between the steering shaft 3 the output shaft 13.

Specifically, the direction and the magnitude of the torque are detected in the following manner. That is to say, as mentioned above, when the steering shaft 3 and the output shaft 13 relatively rotate, there is a phase shift in the circumferential direction generated between the sleeve 18 and the torque detecting concave and convex portions 28. As a result, a change in the impedance of the detecting coil corresponding to the direction and the magnitude of this phase shift is generated. Consequently, the torque sensor 15 detects the direction and the magnitude of the torque based on such a change (increase and decrease from a reference value) in the impedance. Then, the control device sends a signal to the electric motor 8 to drive according the signal that represents the detected value of this torque, and other signals that represent the vehicle speed, or the like, and generates an auxiliary force in a predetermined direction and at a predetermined magnitude.

In the case of an electric power steering device configured in this manner, the torque output from the output shaft 13 of the steering force auxiliary device 10 can be made larger than the torque applied from the steering wheel 1 to the steering shaft 3. That is to say, the torque output from the output shaft 13 can be made larger by the amount of the auxiliary force applied from the electric motor 8 which constitutes the steering force auxiliary device 10, via the worm reducer 14. Accordingly, the force required by the driver for operating the steering wheel 1 in order to impart a steering angle to the steered vehicle wheels can be made smaller by the amount of the auxiliary force of the steering force auxiliary device 10.

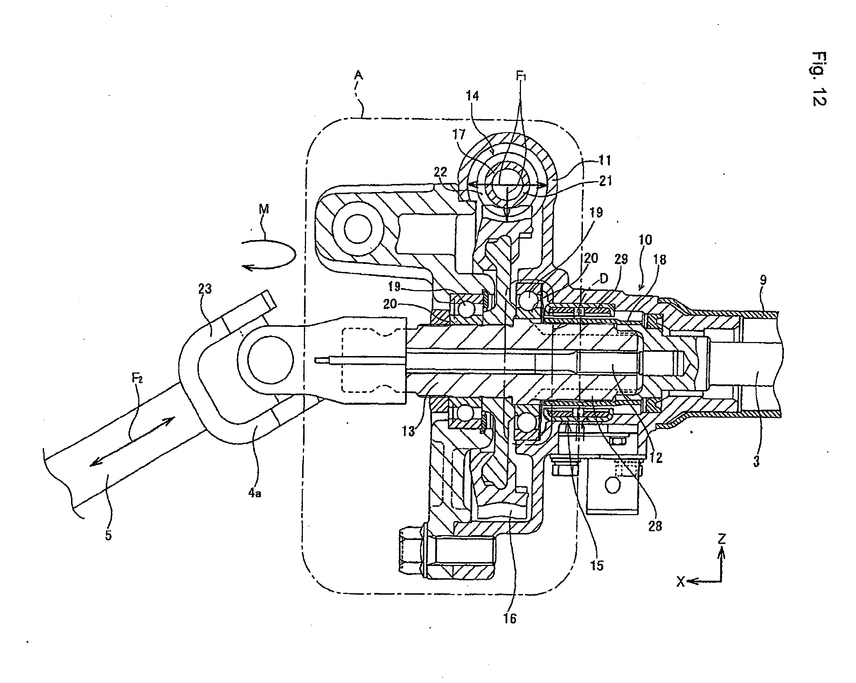

Incidentally, in the case of the construction shown in FIG. 11, a pair of rolling bearings 19 are provided on both axial direction sides of the worm wheel 16 which constitutes the worm reducer 14, and as a result of both of these rolling bearings 19, the output shaft 13 serving as a rotation shaft, is freely rotatably supported with respect to the housing 11. Generally, the output shaft 13 is internally fitted to the inner ring 20 of these rolling bearings 19 with a clearance fit. In the case of such a construction, there is the possibility of stick slip occurring between the outer peripheral face of the output shaft 13 and the inner peripheral face of the inner ring 20 of the rolling bearings 19. This point is explained using FIGS. 12 to 14. The construction of the steering force auxiliary device 10 shown in FIGS. 12 to 14 is essentially the same as the one shown in FIG. 11.

Together with the increased output of electric power steering devices in recent years, the force (load) applied to the output shaft 13 has become large, and together with this, the force applied to the rolling bearings 19 has also increased. More specifically, the following three types of forces are applied to the output shaft 13 as shown in FIG. 12.
(1) a force (reaction force) F₁ based on the meshing between the worm wheel 16 and the worm 17
(2) a moment M that is applied around a yoke 23 of the universal joint 4a
(3) an axial direction load (sliding load) F₂ of the intermediate shaft 5

For example, in the case of a high output electric power steering device in which the output torque of the electric motor 8 is of the order of 6 Nm, the force F₁ becomes approximately 600 to 1500 N in the three axial directions (XYZ directions), the moment M becomes approximately 80 to 90 Nm, and the axial direction load F₂ becomes approximately 1500 N.

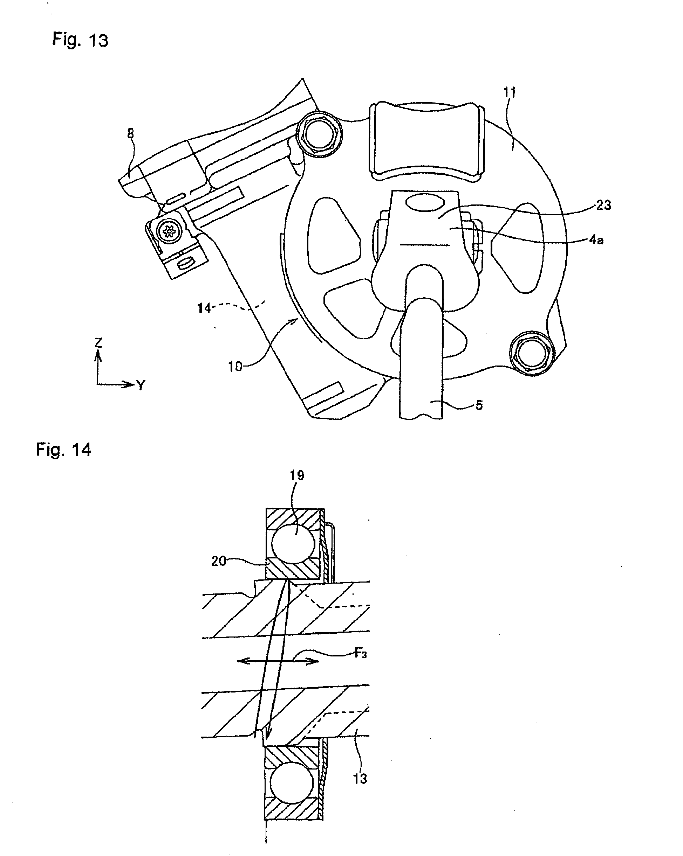

When such forces are applied to the output shaft 13, the output shaft 13 distorts, and as shown exaggeratively in FIG. 14, the central axis of the output shaft 13 is inclined. That is to say, there is the possibility of the central axis in a loaded state becoming displaced with respect to the central axis in a load-free state. In particular, since the output shaft 13 is, as mentioned above, generally internally fitted to the inner rings 20 of the pair of rolling bearings 19 with a clearance fit, then based on this gap, there is a tendency for this output shaft 13 to become tilted with respect to the inner rings 20 while spirally rotating. Moreover, together with such a rotation, and as similarly shown in FIG. 14, there is a tendency for the force F₃ to be applied in the axial direction of the output shaft 13. As a result, there is a tendency for the output shaft 13 to be displaced in the axial direction based on such an axial direction force F₃ (and the forces F₁, F₂, and M, mentioned above), and together with this displacement, there is a possibility for it to become a stick slip state in which fixing and slipping is repeated between the outer peripheral face of the output shaft 13 and the inner peripheral face of the inner rings 20. Moreover, accompanying such a stick slip between the peripheral faces, there is a possibility of vibrations and abnormal noise, such as "chattering", to be generated, presenting discomfort, unpleasant sensations, or the like, to the driver.

### [Related Art Documents]

### [Patent Documents]

[Patent Document 1] Japanese Unexamined Patent Publication No. 2000-193541. [Patent Document 2] EP1571067 discloses an electric power steering apparatus that generates an assist steering torque by an electric motor in response to a steering torque applied on a steering wheel and transmits it to an output shaft of a steering mechanism while reducing it by means of a reduction gear. A drive gear shaft in said reduction gear is supported at its both ends by a first and second bearings respectively, preload means for preloading said drive gear shaft toward meshing direction with a driven gear is provided in or in the vicinity of said first bearing. A small gap is formed between said drive gear shaft and an inner ring of said second bearing to allow said drive gear shaft to be tilted relative to said inner ring of the second bearing. A buffer member is provided in at least a portion of said small gap.

### DISCLOSURE OF THE INVENTION

### [Problems to be Solved by the Invention]

The present invention takes the above circumstances into consideration, with an object of providing an electric power steering device that is provided with a construction that can suppress the generation of stick slip where fixing and sliding is repeated between the outer peripheral face of the output shaft serving as the rotation shaft, and the inner peripheral face of the inner ring of the rolling bearings, and can reduce or prevent the generation of vibrations and abnormal noise, such as "chattering", arising from this stick slip.

### [Means for Solving the Problem]

An electric power steering device in accordance with the present invention is provided as defined by claim 1. The electric power steering device of the present invention is, in the same manner as the conventional construction, provided with a housing, a rotation shaft, a worm wheel, a worm, and an electric motor.

The housing is supported by a fixed part such as the frame of the vehicle body, the steering column, or the like, and does not rotate. The rotation shaft is freely rotatably provided with respect to the housing, and rotates as a result of the operation of the steering wheel, and together with this rotation, imparts a steering angle to a steered wheel. The worm wheel is supported by a portion of the rotation shaft in the interior of the housing, concentric with the rotation shaft, and rotates together with the rotation shaft. The worm, in a state meshed with the worm wheel, is freely rotatably supported with respect to the housing. The electric motor rotationally drives the worm. Moreover, by means of at least one pair of rolling bearings respectively provided on both axial direction sides of the worm wheel, the rotation shaft is freely rotatably supported with respect to the housing.

In particular, in the electric power steering device of the present invention, a lubricant is interposed between the inner peripheral face of at least one of the inner rings of the inner rings, or more preferably all of the inner rings, which constitute the rolling bearings, and the outer peripheral face of the rotation shaft.

Preferably, prior to externally fitting the inner rings of the rolling bearings onto the rotation shaft, lubricant is applied between, at the very least, one of the peripheral faces of the inner peripheral face of one of the inner rings, and the outer peripheral face of the rotation shaft.

In a case of implementing the electric power steering device of the present invention as mentioned above, the following configuration is employed. A first rolling bearing, which is present on the front end side of the rotation shaft sandwiching the worm wheel, is made a single row deep groove-type ball bearing. Furthermore, one part in the axial direction of the outer peripheral face of the rotation shaft is provided with torque detecting concave and convex portions which are alternately arranged with respect to the circumferential direction, and are formed with concave portions and convex portions respectively extending in the axial direction. Moreover, in relation to the axial direction, a large diameter portion that has a larger diameter than the torque detecting concave and convex portions is provided on a part adjacent to the front end side of the torque detecting concave and convex portions. In addition, in regard to the inner ring that constitutes a second rolling bearing, which is present on the rear end side of the rotation shaft sandwiching the worm wheel, only one part on the front end side with respect to the axial direction is externally fitted onto the large diameter portion, and the engaged state between the inner peripheral face of the inner ring and the large diameter portion is a clearance fit. Furthermore, lubricant is interposed, at least between the inner peripheral face of the inner ring constitutes the of the second rolling bearing, and the outer peripheral face of the rotation shaft.

In this case, preferably, of the outer peripheral face of the rotation shaft, the part in which lubricant is interposed between it and the inner peripheral face of the inner ring which constitutes the rolling bearing, is configured by a face in which plurality of concave portions, or a groove, is formed. Furthermore, alternatively, of the outer peripheral face of the rotation shaft, the part in which lubricant is interposed between it and the inner peripheral face of the inner ring which constitutes the rolling bearing, is made a Plateau surface (a face with flat convexities and that has deep concavities). The skewness Rsk, which is the surface roughness parameter relating to this Plateau surface, is made Rsk < 0. Such a Plateau surface can be obtained by various conventionally known processing methods, such as carrying out a finish honing after performing a rough honing on the processed face. However, the shape for retaining the lubricant is in no way limited to these, and in addition, may be a concave groove that extends in the circumferential direction, a plurality of dimples (fine concavities), other shapes thereof, and furthermore, it is possible to apply a combination of these.

The lubricant that is interposed between the inner peripheral face of the inner ring which constitutes the rolling bearing, and the outer peripheral face of the rotation shaft, can be the same as the lubricant that is used for the meshing portion between the worm and worm wheel.

On the other hand, in an not claimed arrangement of the electric power steering device, an elastic material, for example, an elastomer such as rubber, synthetic resin, or the like, is interposed between the inner peripheral face of at least one of the inner rings among the inner rings, or more preferably all of the inner rings which constitute the rolling bearings, and the outer peripheral face of the rotation shaft.

In this arrangement, preferably, an inwardly concave portion is provided on the outer peripheral face of the rotation shaft at a position facing the inner peripheral face of the inner ring, which is concave inwards in the radial direction. Moreover, the elastic material mentioned above is provided in this inwardly concave portion, and is preferably integrated with the rotation shaft. Alternatively, an outwardly concave portion which is concave outwards in the radial direction is provided on one axial direction part of the inner peripheral face of at least one of the inner rings. Moreover, the elastic material is provided in this outwardly concave portion, and is preferably integrated with the rotation shaft.

The configurations of both of the two not claimed arrangements mentioned above can also be employed simultaneously. That is to say, both a lubricant and an elastic material can also be interposed between the inner peripheral face of at least one of the inner rings among the inner rings, or more preferably all of the inner rings, that constitute the rolling bearings, and the outer peripheral face of the rotation shaft.

### [Effects of the Invention]

According to the electric power steering device of the present invention, which is configured as described above, the occurrence of stick slip between the outer peripheral face of the rotation shaft and the inner peripheral face of the inner ring of the rolling bearings can be reduced or prevented.

That is to say, in the present invention, a lubricant is interposed between the inner peripheral face of the inner rings of the rolling bearings and the outer peripheral face of the rotation shaft, and the friction coefficient between these peripheral faces is changed. Consequently, even if this rotation shaft becomes likely to be displaced in the axial direction, as a result of these lubricants, elastic materials, or the like, the sliding or axial displacement between these peripheral faces can be made smooth, and the occurrence of stick slip can be reduced or prevented. As a result, a reduction or elimination of vibrations and abnormal noise such as "chattering" can be achieved, a smooth and comfortable steering sensation can be assured, and the situation where the driver is subjected to discomfort, unpleasant sensations, and the like, can be prevented.

In particular, there is a case which employs a configuration where, of the pair of rolling bearings that are provided on both axial direction sides of the worm wheel and which freely rotatably support the rotation shaft with respect to the housing, as the one rolling bearing present on the front end side of the rotation shaft sandwiching the worm wheel, a single row deep groove-type ball bearing is utilized instead of a four-point contact-type ball bearing, due to demands of cost reduction and torque reduction. Whereas, in regard to the other rolling bearing present on the rear end side of the rotation shaft, of the outer peripheral face of the rotation shaft, only one part of the front end side of the inner ring is externally fitted with respect to the large diameter portion adjacent to the front end side of the torque detecting concave and convex portions, and this is installed in a state with the fit between the inner peripheral face of the inner ring and the large diameter portion as a clearance fit. In this configuration, it becomes easier for stick slip to occur between the inner ring of the other rolling bearing and the large diameter portion, which is attributable to the rotation shaft becoming easily displaced at the time of usage, and the central axes of the inner ring of the other rolling bearing and the rotation shaft becoming easily tilted. As a result of the present invention, even in such a configuration, it is possible to reduce or prevent the occurrence of stick slip between the inner peripheral face of the inner ring of the other rolling bearing and the outer peripheral face of the rotation shaft.

Furthermore, in the present invention, by devising the face shape of the part of the outer peripheral face of the rotation shaft, where the lubricant is interposed between the rotation shaft and the inner peripheral face of the inner ring which constitutes the rolling bearing, the lubricant collects on this face. Therefore the lubricated state between these can be well maintained over a long period. As a result, the effect of reducing or preventing the occurrence of stick slip, which occurs between the outer peripheral face of the rotation shaft and the inner peripheral face of the inner ring, can be maintained over a long period.

### BRIEF DESCRIPTION OF THE DRAWINGS

FIG. 1 is a diagram showing the construction of a first and second embodiment of the present invention, corresponding to section A of FIG. 12.
FIG. 2 is a diagram corresponding to section B of FIG. 1.
FIG. 3 is a perspective view of an output shaft, illustrating a third embodiment of the present invention.
FIG. 4 is a perspective view of an output shaft, illustrating a fourth embodiment of the present invention.
FIG. 5 is a perspective view of an output shaft, illustrating a fifth embodiment of the present invention.
FIG. 6 is a perspective view of an output shaft, illustrating a sixth embodiment of the present invention.
FIG. 7 is a diagram showing a roughness curve of the Plateau surface provided on the outer peripheral face of the output shaft, in a seventh embodiment of the present invention.
FIG. 8 is a diagram corresponding to section C of FIG. 1, illustrating a not claimed arrangement.
FIG. 9 is a diagram the same as FIG. 8, illustrating another not claimed arrangement.
FIG. 10 is a partial longitudinal side view showing one example of a steering device for an automobile.
FIG. 11 is a cross-sectional view showing one example of an electric power steering device of a conventional construction.
FIG. 12 is a cross-sectional view showing another example of an electric power steering device of a conventional construction.
FIG. 13 is a diagram viewed from the left of FIG. 12.
FIG. 14 is a diagram corresponding to section D of FIG. 12 exaggeratively showing the tilting of the rotation shaft.

### EMBODIMENTS OF THE PRESENT INVENTION

### [First Embodiment]

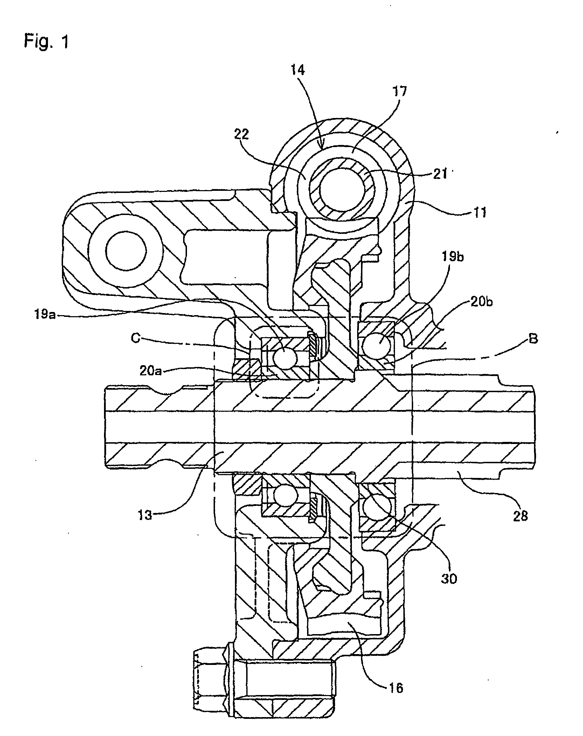

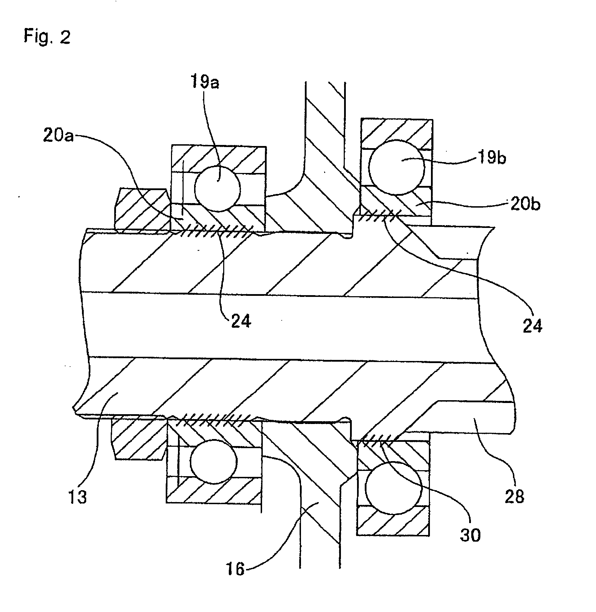

FIGS. 1 and 2 show a first embodiment of the present invention. The electric power steering device of the present example is characterized by a configuration for making stick slip more difficult to occur between an output shaft 13 corresponding to the rotation shaft of the present invention, and inner rings 20a and 20b of a pair of rolling bearings 19a and 19b which support the output shaft 13. In addition, in regard to the construction and the operation of the electric power steering device as a whole, since this is the same as the conventional construction shown in FIG. 11, or the construction shown in FIGS. 12 to 14, illustration and explanation relating to the sections that are the same as these constructions are omitted or simplified, and hereunder, it will be described focusing on the characteristic portions of the present example.

Also in the case of the present example, in the same manner as the construction shown in FIGS. 12 and 13, the output shaft 13 is freely rotatably supported with respect to the housing 11 by the rolling bearings 19a and 19b which are respectively provided on both axial direction sides of the worm wheel 16. Furthermore, in the case of the present example, as shown in FIG. 2, a lubricant 24, such as lubricant oil or grease, is interposed between the inner peripheral face of the inner rings 20a and 20b which constitute the rolling bearings 19a and 19b, and the outer peripheral face of the output shaft 13. As a result, the lubricant 24 is applied to at least one of the faces among the inner peripheral faces of the inner rings 20a and 20b, and the outer peripheral face of the output shaft 13 prior to externally fitting the inner rings 20a and 20b of the rolling bearings 19a and 19b onto the output shaft 13.

In the case of the present example which is configured in this manner, the occurrence of stick slip between the outer peripheral face of the output shaft 13 and the inner peripheral face of the inner rings 20a and 20b of the rolling bearings 19a and 19b can be reduced or prevented.

That is to say, even if the output shaft 13 becomes likely to be displaced in the axial direction, as a result of the lubricant 24 interposed between the inner peripheral face of the inner rings 20a and 20b of the rolling bearings 19a and 19b and the outer peripheral face of the output shaft 13, the sliding between the peripheral faces can be made smooth, and the occurrence of stick slip can be reduced or prevented. As a result, a reduction or elimination of vibrations and abnormal noise, such as "chattering", can be achieved, a smooth and comfortable steering sensation can be assured, and the situation where the driver is subjected to discomfort, unpleasant sensations, and the like, can be prevented.

In the examples shown in the drawings, the lubricant 24 is interposed both between the inner peripheral face of the inner rings 20a and 20b of both rolling bearings 19a and 19b, and the outer peripheral face of the output shaft 13. However depending on the case, it is also possible for the lubricant 24 to be interposed between either one, for example, only the inner ring 20b of the rolling bearing 19b on the side (the right side of FIG. 2) in which stick slip easily occurs. Furthermore, in the examples shown in the drawings, the output shaft 13 is supported by a pair of rolling bearings. However it is acceptable for the output shaft 13 to be supported by three or more rolling bearings. In such a case, it is acceptable if the lubricant 24 is interposed between the inner peripheral face of the inner rings of at least one of the rolling bearings and the outer peripheral face of the output shaft 13.

As the lubricant 24 that is applied to either face, which is the inner peripheral face of the inner rings 20a and 20b or the outer peripheral face of the output shaft 13, it is possible to utilize the same substance as the lubricant used for the meshing portion between the worm 17 and the worm wheel 16. As a result, at the time of application of the lubricant, mistakes in coating can be prevented, and also the types of lubricants applied to the electric power steering device can be reduced, and the management thereof becomes easy. Furthermore, even in a case where one lubricant becomes mixed with the other due to utilization over a long period, there is the advantage that problems due to mixing do not occur.

### [Second Embodiment]

A second embodiment of the present invention is described with reference to the same FIGS. 1 and 2. In an electric power steering device of this configuration, among the pair of rolling bearings 19a and 19b, as the one rolling bearing 19a which is present on the front end side of the output shaft 13 sandwiching the worm wheel 16, normally a four-point contact-type ball bearing is utilized. However, four-point contact-type ball bearings are relatively expensive, and furthermore, the dynamic torque is large. As a result, in the case of the present example, as the one rolling bearing 19a mentioned above, by utilizing a relatively low cost, and furthermore, low dynamic torque, single row deep groove-type ball bearing, cost reduction and torque reduction is achieved.

Furthermore, as shown in FIGS. 1 and 2, among the pair of rolling bearings 19a and 19b, the other rolling bearing 19b which is present on the rear end side of the output shaft 13 sandwiching the worm wheel 16, has only the axial direction front half portion of the inner ring 20b externally fitted with respect to, of the outer peripheral face of the output shaft 13, the large diameter portion 30 which is adjacent to the front end side of the torque detecting concave and convex portions 28, and is installed in a state with the engagement state between the inner peripheral face of the inner ring 20b and the large diameter portion 30 as a clearance fit. In the case of an electric power steering device possessing such a configuration, at the time of driving, the central axes of the inner ring 20b and the output shaft 13 become more easily tilted, and it becomes easier for stick slip to occur between the outer peripheral face of the inner ring 20b and the large diameter portion 30.

Furthermore, in the case of the present example, a single row deep groove-type ball bearing is utilized as the one rolling bearing 19a. However in a case where such a configuration is employed, compared to a case where a four-point contact-type ball bearing is utilized as one of the rolling bearings 19a, it becomes easier for the output shaft 13 to be displaced in the axial direction at the time of use. Accordingly, in a case where neither measure is carried out, it becomes easier for stick slip to occur between the inner peripheral face of the inner ring 20b which constitutes the other rolling bearing 19b, and the large diameter portion 30.

Consequently, in the case of the present example, in the same manner as the case of the first embodiment mentioned above, of the intervening space between the inner peripheral face of the inner rings 20a and 20b which constitute the pair of rolling bearings 19a and 19b, and the outer peripheral face of the output shaft 13, the lubricant 24 such as lubricant oil and grease, is interposed between at least the inner peripheral face of the inner ring 20b which constitutes the other rolling bearings 19b, and the outer peripheral face of the output shaft 13 (large diameter portion 30). As a result, despite the circumstances such as those mentioned above, at the very least, a reduction or prevention of stick slip that occurs between the inner peripheral face of the inner ring 20b which constitutes the other rolling bearings 19b, and the outer peripheral face of the output shaft 13 (large diameter portion 30) can be achieved.

### [Third Embodiment]

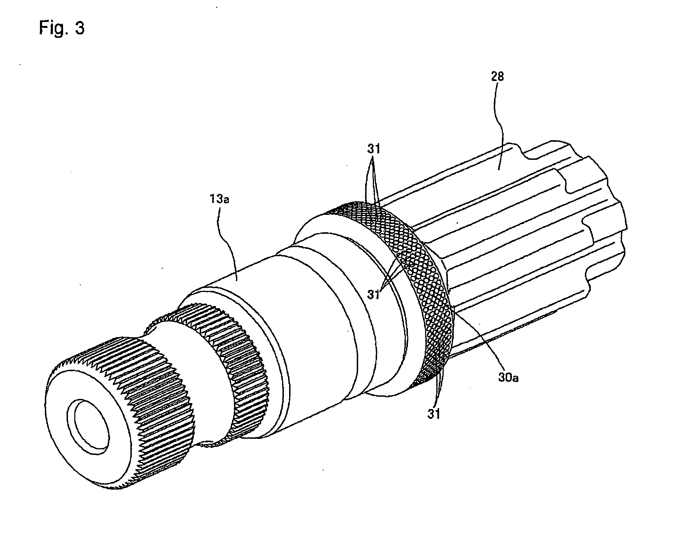

FIG. 3 shows a third embodiment of the present invention. In the case of the present example, on the whole large diameter portion 30a, which, of the outer peripheral face of the output shaft 13a, is the part that externally fits with the axial direction front half portion of the inner ring 20b of the other rolling bearing 19b (refer to FIGS. 1 and 2), a plurality of small and circular concave portions 31, respectively referred to as dimples, are formed.

In the case of the electric power steering device of the present example which possesses such a configuration, the lubricant 24 collects in the concave portions 31 (refer to FIG. 2). Therefore the lubricated state between the large diameter portion 30a and the inner peripheral face of the inner ring 20b can be well maintained over a long period. As a result, the effect of reducing or preventing the occurrence of stick slip, which occurs between the large diameter portion 30a and the inner peripheral face of the inner ring 20b can be maintained over a long period. Other configurations and operations are the same as the case of the first or the second embodiments.

### [Fourth Embodiment]

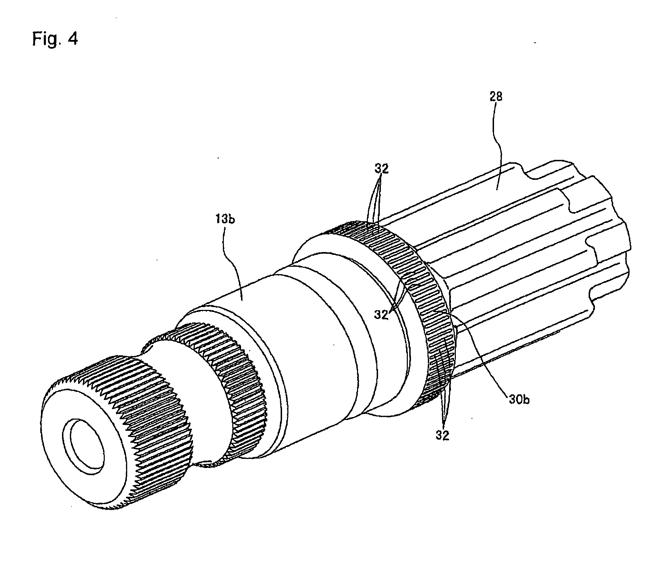

FIG. 4 shows a fourth embodiment of the present invention. In the case of the present example, on the width direction intermediate portion of the large diameter portion 30b, which, of the outer peripheral face of the output shaft 13b, is the part that externally fits with the axial direction front half portion of the inner ring 20b of the other rolling bearing 19b (refer to FIGS. 1 and 2), a plurality of grooves 32 that span the axial direction are formed at an equal spacing with respect to the circumferential direction. The configuration and operation, other than the point that the lubricant accumulating part formed on the large diameter portion 30b is the grooves 32 instead of the plurality of concave portions 31 (refer to FIG. 3), is the same as the case of the third embodiment.

### [Fifth Embodiment]

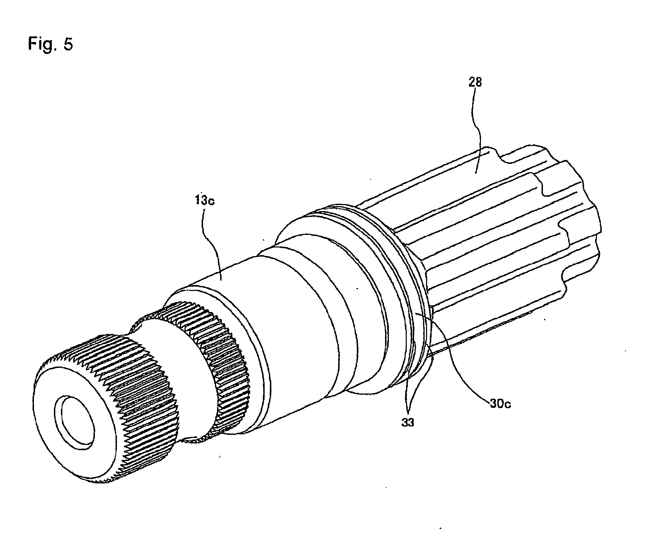

FIG. 5 shows a fifth embodiment of the present invention. In the case of the present example, on the width direction intermediate portion of the large diameter portion 30c, which, of the outer peripheral face of the output shaft 13c, is the part that externally fits with the axial direction front half portion of the inner ring 20b of the other rolling bearing 19b (refer to FIGS. 1 and 2), two concave grooves 33 that extend around the circumferential direction are formed at an equal spacing with respect to the circumferential direction. The configuration and operation, other than the point that the lubricant accumulating part formed on the large diameter portion 30c is the two circumferential direction concave grooves 33, is the same as the case of the third and the fourth embodiments.

### [Sixth Embodiment]

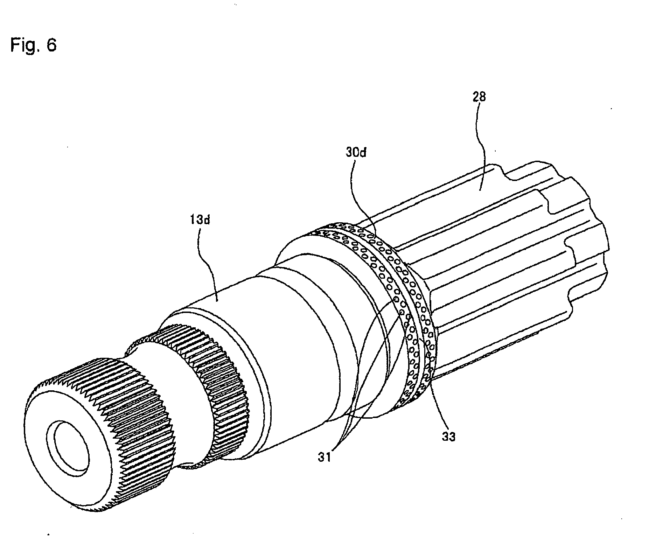

FIG. 6 shows a sixth embodiment of the present invention. In the case of the present example, on the width direction intermediate portion of the large diameter portion 30d, which, of the outer peripheral face of the output shaft 13d, is the part that externally fits with the axial direction front half portion of the inner ring 20b of the other rolling bearing 19b (refer to FIGS. 1 and 2), as well as forming one concave groove 33 that extends around the circumferential direction, a plurality of small and circular concave portions are formed on both sides of the concave groove 33. The configuration and operation, other than the point that the lubricant accumulating part formed on the large diameter portion 30d is a combination of one circumferential direction concave groove 33 and the concave portions 31, is the same as the case of the third to the fifth embodiments.

In the case of carrying out the present invention, it is possible to form a lubricant accumulating part, such as the concave portion 31 or the concave groove 32 mentioned above, on the section of the outer peripheral face of the output shaft that externally fits with the inner ring 20a of the one rolling bearing 19a (refer to FIGS. 1 to 2). Furthermore, selectively, or additionally, it is also possible to form a lubricant accumulating part on the inner peripheral face of the inner rings 20a and 20b of the rolling bearing 19a that corresponds to the concave groove or the concave portion of the third to the sixth examples.

### [Seventh Embodiment]

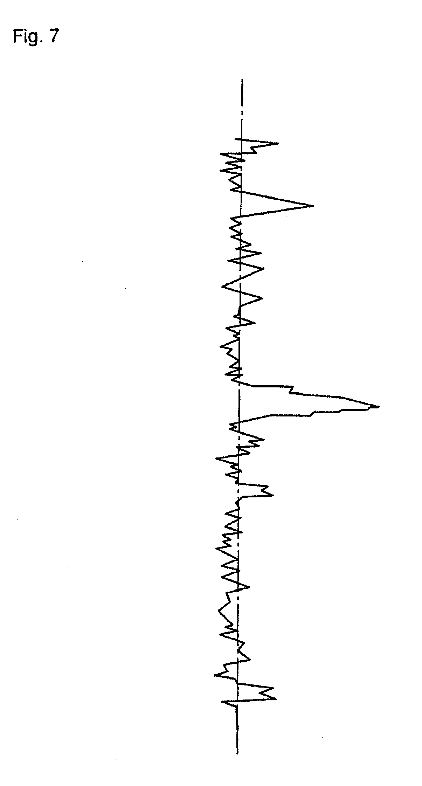

A seventh embodiment of the present invention is described with reference to, in addition to FIGS. 1 and 2, FIG. 7. In the case of the present example, of the outer peripheral face of the output shaft 13, the parts that externally fit with the inner rings 20a and 20b of the pair of rolling bearings 19a and 19b are respectively made a Plateau surface. In regard to this Plateau surface, as shown by the roughness curve thereof in FIG. 7, as well as the convexity being relatively flat (roughness is small), it is a face that possesses a deep concavity. Furthermore, the skewness Rₛₖ, which is the surface roughness parameter relating to this Plateau surface, is made Rₛₖ < 0. Such a Plateau surface can be obtained by various conventionally known processing methods, such as carrying out a finish honing after performing a rough honing on the processed face.

In the case of the electric power steering device of the present example, which possesses such a configuration, the lubricant 24 (refer to FIG. 2) collects in the deep concavity that is present on the Plateau surface. Therefore the lubricated state between the outer peripheral face of the output shaft 13 and the inner peripheral face of the inner rings 20a and 20b can be well maintained over a long period. As a result, the effect in that the reduction or elimination of stick slip occurring between the outer peripheral face of the output shaft 13 and the inner peripheral face of the inner rings 20a and 20b can be achieved, can be maintained over a long period. Other configurations and operations are the same as the case of the first or the second embodiments.

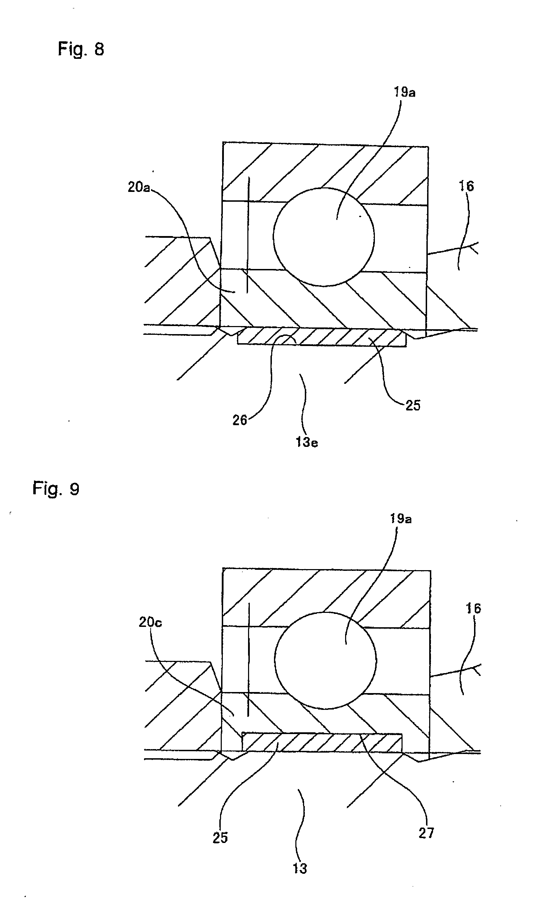

FIG. 8 shows a not claimed arrangement. In the case of the present example, an elastic material 25, for example, an elastomer such as rubber, synthetic resin, or the like, is interposed between the inner peripheral face of the inner ring 20a which constitutes the rolling bearing 19a, and the outer peripheral face of the output shaft 13e. Therefore in the present example, on the outer peripheral face of the output shaft 13e, at a position facing the inner peripheral face of the inner ring 20a, an inwardly concave portion 26 that is concave inwards in the radial direction is provided around the whole circumference. Moreover in this inwardly concave portion 26, a cylindrical elastic material 25 is provided. As a result, the elastic material 25 is sandwiched in the radial direction around the entire circumference between the inner peripheral face of the inner ring 20a and the outer peripheral face of the output shaft 13e (bottom face of the inwardly concave portion 26). FIG. 8 shows, in regard to the configuration of FIG. 1, the engaged portion between the inner ring 20a of the rolling bearing 19a on the left side and the output shaft 13e. However it is acceptable if the elastic material 25 is also interposed between the inner peripheral face of the inner ring 20b of the rolling bearing 19b on the right side (refer to FIG. 1) and the outer peripheral face of the output shaft 13e.

In the case of such a present example, in the same manner as the first embodiment, the occurrence of stick slip can be reduced or prevented. That is to say, the elastic material 25 is interposed between the inner peripheral face of the inner ring 20a of the rolling bearing 19a and the outer peripheral face of the output shaft 13c. Consequently, even if the output shaft 13e becomes likely to be displaced in the axial direction, as a result of this elastic material 25 being displaced in the axial direction, the displacement between the peripheral faces can be made smooth, and the reduction or elimination of the occurrence of stick slip can be achieved. As a result, a reduction of vibrations and abnormal noise such as "chattering" can be achieved, a smooth and comfortable steering sensation can be assured, and the situation where the driver is subjected to discomfort, unpleasant sensations, and the like at the time of driving can be prevented. The configuration and operation of the other parts are the same as the first embodiment, and hence illustration and explanation relating to the common sections are omitted.

As necessary, the lubricant 24 (refer to FIG. 2) can be interposed between the inner peripheral face of the inner ring 20a and the outer peripheral face of the elastic material 25 which is externally fitted onto the output shaft 13e, as in the first embodiment.

FIG. 9 shows another not claimed arrangement. In the present example, in the same manner as the eighth embodiment mentioned above, an elastic material 25, for example, an elastomer such as rubber, synthetic resin, or the like, is interposed between the inner peripheral face of the inner ring 20c which constitutes the rolling bearing 19a, and the outer peripheral face of the output shaft 13. Therefore in the present example, an outwardly concave portion 27 that is concave outwards in the radial direction, is provided around the entire circumference in the axial direction intermediate portion of the inner peripheral face of the inner ring 20c. Moreover in this outwardly concave portion 27, a cylindrical elastic material 25 is provided. As a result, the elastic material 25 is sandwiched in the radial direction around the entire circumference between the inner peripheral face of the inner ring 20c (bottom face of the outwardly concave portion 27) and the outer peripheral face of the output shaft 13. Also in the case of such a present example, in the same manner as the eighth embodiment, the reduction or elimination of stick slip can be achieved. Furthermore, also in the case of the present example, it is also possible for lubricant to be interposed between the outer peripheral face of the output shaft 13 and the inner peripheral face of the elastic material 25. The configuration and operation of the other parts are the same as the previous arrangement, and hence illustration and explanation relating to the common sections are omitted.

### [Brief Description of the Reference Symbols]

1 Steering wheel
2 Steering gear unit
3 Steering shaft
4a, 4b Universal joint
5 Intermediate shaft
6 Input shaft
7 Tie rod
8 Electric motor
9 Steering column
10 Steering force auxiliary device
11 Housing
12 Torsion bar
13, 13a, 13b, 13c, 13d, 13e Output shaft
14 Worm reducer
15 Torque sensor
16 Worm wheel
17 Worm
18 Sleeve
19a, 19b Rolling bearings
20a, 20b, 20c Inner ring
21 Worm shaft
22 Worm teeth
23 Yoke
24 Lubricant
25 Elastic material
26 Inwardly concave portion
27 Outwardly concave portion
28 Torque detecting concave and convex portions
29 Torque detecting coil
30, 30a, 30b, 30c, 30d Large diameter portion
31 Concave portion
32 Axial direction concave groove
33 Circumferential direction concave groove

## Claims

1. An electric power steering device comprising:
a housing (11) supported by a fixed part, and that does not rotate;
a rotation shaft (13, 13a, 13b, 13c, 13d, 13e) that is freely rotatably provided with respect to the housing (11), and rotates as a result of an operation of a steering wheel (1), and together with this rotation, imparts a steering angle to a steered wheel;
a worm wheel (16) supported by a portion of the rotation shaft (13, 13a, 13b, 13c, 13d, 13e) in the interior of the housing (11), concentric with the rotation shaft (13, 13a, 13b, 13c, 13d, 13e), and that rotates together with the rotation shaft (13, 13a, 13b, 13c, 13d, 13e);
a worm (17) that in a state meshed with the worm wheel (16), is freely rotatably supported inside the housing (11);
an electric motor (8) for rotationally driving the worm (17);
at least one pair of rolling bearings (19a, 19b) provided on both axial direction sides of the worm wheel (16), that freely rotatably support the rotation shaft (13, 13a, 13b, 13c, 13d, 13e) with respect to the housing (11); each rolling bearing (19a, 19b) comrising an inner ring (20a, 20b, 20c) and an outer ring; and
a lubricant (24) that is interposed between the inner peripheral face of at least one of the inner rings (20a, 20b, 20c) and the outer peripheral face of the rotation shaft (13, 13a, 13b, 13c, 13d, 13e).
**characterized in that** a first rolling bearing (19a) which is present on the front end side of the rotation shaft (13, 13a, 13b, 13c, 13d, 13e) sandwiching the worm wheel (16), is a single row deep groove-type ball bearing, and
one part in the axial direction of the outer peripheral face of the rotation shaft (13, 13a, 13b, 13c, 13d, 13e) is provided with torque detecting concave and convex portions (28) which are alternatively arranged with respect to the circumferential direction, and are formed with concave portions and convex portions respectively extending in the axial direction, and in relation to the axial direction, a large diameter portion (30, 30a, 30b, 30c, 30d) that has a larger diameter than the torque detecting concave and convex portions (28) is provided on a part adjacent to the front end side of the torque detecting concave and convex portions (28), and in regard to the inner ring (20a, 20b, 20c) that constitutes a second rolling bearing (19b), which is present on the rear end side of the rotation shaft (13, 13a, 13b, 13c, 13d, 13e) sandwiching the worm wheel (16), only one part on the front end side with respect to the axial direction is externally fitted onto the large diameter portion (30, 30a, 30b, 30c, 30d), and the engaged state between the inner peripheral face of the inner ring (20a, 20b, 20c) and the large diameter portion (30, 30a, 30b, 30c, 30d) is a clearance fit;
and lubricant (24) is interposed, at least between the inner peripheral face of the inner ring (20a, 20b, 20c) of the second rolling bearing (19b), and the outer peripheral face of the large diameter portion of the rotation shaft (13, 13a, 13b, 13c, 13d, 13e).

2. An electric power steering device according to claim 1, wherein the outer peripheral face of the large diameter portion (30, 30a, 30b, 30c, 30d) of the rotation shaft (13, 13a, 13b, 13c, 13d, 13e), has a face formed with any one of; a plurality of concave portions (31), a plurality of grooves (32) that span the axial direction, at least one concave groove (33) that extends in the circumferential direction, or a combination of these.

3. An electric power steering device according to claim 1, wherein the outer peripheral face of the large diameter portion (30, 30a, 30b, 30c, 30d) of the rotation shaft (13, 13a, 13b, 13c, 13d, 13e) has a Plateau surface.

4. An electric power steering device according to claim 1, wherein for the lubricant (24) that is interposed between the inner peripheral face of the inner ring (20a, 20b, 20c) of the second rolling bearing (19a, 19b), and the outer peripheral face of the large diameter portion (30, 30a, 30b, 30c, 30d) of the rotation shaft (13, 13a, 13b, 13c, 13d, 13e), one the same as the lubricant (24) used for the meshing portion between the worm (17) and worm wheel (16) is used.

## Patentansprüche

1. Elektrische Servolenkvorrichtung, die aufweist:
ein Gehäuse (11), das von einem stationären Teil getragen wird, und das sich nicht dreht;
eine Rotationswelle (13, 13a, 13b, 13c, 13d, 13e), die mit Bezugnahme auf das Gehäuse (11) ungehindert drehbar bereitgestellt wird, und die sich im Ergebnis einer Betätigung eines Lenkrades (1) dreht und zusammen mit dieser Drehung einem Lenkrad einen Lenkwinkel erteilt;
ein Schneckenrad (16), das von einem Abschnitt der Rotationswelle (13, 13a, 13b, 13c, 13d, 13e) im Inneren des Gehäuses (11) konzentrisch mit der Rotationswelle (13, 13a, 13b, 13c, 13d, 13e) getragen wird, und das sich zusammen mit der Rotationswelle (13, 13a, 13b, 13c, 13d, 13e) dreht;
eine Schnecke (17), die in einem Zustand in Eingriff mit dem Schneckenrad (16) ungehindert drehbar innerhalb des Gehäuses (11) getragen wird;
einen Elektromotor (8) für das rotierende Antreiben der Schnecke (17);
mindestens ein Paar Wälzlager (19a, 19b), die auf beiden axialen Richtungsseiten des Schneckenrades (16) vorhanden sind, die ungehindert drehbar die Rotationswelle (13, 13a, 13b, 13c, 13d, 13e) mit Bezugnahme auf das Gehäuse (11) tragen, wobei ein jedes Wälzlager (19a, 19b) einen Innenring (20a, 20b, 20c) und einen Außenring aufweist; und
ein Schmiermittel (24), das zwischen der inneren Umfangsfläche von mindestens einem der Innenringe (20a, 20b, 20c) und der äußeren Umfangsfläche der Rotationswelle (13, 13a, 13b, 13c, 13d, 13e) angeordnet ist,
**dadurch gekennzeichnet, dass** ein erstes Wälzlager (19a), das an der vorderen Endseite der Rotationswelle (13, 13a, 13b, 13c, 13d, 13e) vorhanden ist, wobei das Schneckenrad (16) dazwischen angeordnet ist, ein einreihiges Rillenkugellager ist, und
ein Teil in der axialen Richtung der äußeren Umfangsfläche der Rotationswelle (13, 13a, 13b, 13c, 13d, 13e) mit konkaven und konvexen Abschnitten (28) zur Drehmomentermittlung versehen ist, die abwechselnd mit Bezugnahme auf die Umfangsrichtung angeordnet und mit jeweils konkaven Abschnitten und konvexen Abschnitten ausgebildet sind, die sich in der axialen Richtung erstrecken, und in Beziehung zur axialen Richtung ist ein Abschnitt (30, 30a, 30b, 30c, 30d) mit großem Durchmesser, der einen größeren Durchmesser aufweist als die konkaven und konvexen Abschnitte (28) zur Drehmomentermittlung, an einem Teil benachbart der vorderen Endseite der konkaven und konvexen Abschnitte (28) zur Drehmomentermittlung vorhanden, und mit Bezugnahme auf den Innenring (20a, 20b, 20c), der ein zweites Wälzlager (19b) bildet, das an der hinteren Endseite der Rotationswelle (13, 13a, 13b, 13c, 13d, 13e) vorhanden ist, wobei das Schneckenrad (16) dazwischen angeordnet ist, ist nur ein Teil an der vorderen Endseite mit Bezugnahme auf die axiale Richtung extern auf dem Abschnitt (30, 30a, 30b, 30c, 30d) mit großem Durchmesser angebracht, und wobei der Eingriffszustand zwischen der inneren Umfangsfläche des Innenringes (20a, 20b, 20c) und dem Abschnitt (30, 30a, 30b, 30c, 30d) mit großem Durchmesser eine Spielpassung aufweist;
und wobei ein Schmiermittel (24) mindestens zwischen der inneren Umfangsfläche des Innenringes (20a, 20b, 20c) des zweiten Wälzlagers (19b) und der äußeren Umfangsfläche des Abschnittes der Rotationswelle (13, 13a, 13b, 13c, 13d, 13e) mit großem Durchmesser angeordnet ist.

2. Elektrische Servolenkvorrichtung nach Anspruch 1, bei der die äußere Umfangsfläche des Abschnittes (30, 30a, 30b, 30c, 30d) mit großem Durchmesser der Rotationswelle (13, 13a, 13b, 13c, 13d, 13e) eine Fläche aufweist, die mit einem der folgenden ausgebildet ist: einer Vielzahl von konkaven Abschnitten (31); einer Vielzahl von Rillen (32), die die axiale Richtung überbrücken; mindestens einer konkaven Rille (33), die sich in der Umfangsrichtung erstreckt; oder einer Kombination dieser.

3. Elektrische Servolenkvorrichtung nach Anspruch 1, bei der die äußere Umfangsfläche des Abschnittes (30, 30a, 30b, 30c, 30d) mit großem Durchmesser der Rotationswelle (13, 13a, 13b, 13c, 13d, 13e) eine Plateaufläche aufweist.

4. Elektrische Servolenkvorrichtung nach Anspruch 1, bei der als Schmiermittel (24), das zwischen der inneren Umfangsfläche des Innenringes (20a, 20b, 20c) des zweiten Wälzlagers (19a, 19b) und der äußeren Umfangsfläche des Abschnittes (30, 30a, 30b, 30c, 30d) mit großem Durchmesser der Rotationswelle (13, 13a, 13b, 13c, 13d, 13e) angeordnet wird, ein und dasselbe wie das Schmiermittel (24) verwendet wird, wie es für den Eingriffsabschnitt zwischen der Schnecke (17) und dem Schneckenrad (16) verwendet wird.

## Revendications

1. Dispositif de direction assistée électrique, comprenant :
un boîtier (11), supporté par une partie fixe, qui ne tourne pas ;
un arbre de rotation (13, 13a, 13b, 13c, 13d, 13e), agencé de sorte à pouvoir tourner librement par rapport au boîtier (11), et tournant par suite d'un actionnement d'un volant de direction (1), et conférant, en combinaison avec cette rotation, un angle de braquage à une roue directrice ;
une roue à vis sans fin (16) supportée par une partie de l'arbre de rotation (13, 13a, 13b, 13c, 13d, 13e) à l'intérieur du boîtier (11), de manière concentrique à l'arbre de rotation (13, 13a, 13b, 13c, 13d, 13e) et tournant ensemble avec l'arbre de rotation (13, 13a, 13b, 13c, 13d, 13e) ;
une vis sans fin (17), qui est, dans un état engrené avec la roue à vis sans fin (16), supportée de manière à pouvoir tourner librement à l'intérieur du boîtier (11) ;
un moteur électrique (8) pour entraîner en rotation la vis sans fin (17) ;
au moins une paire de paliers de roulement (19a, 19b), agencée sur les deux côtés dans la direction axiale de la roue à vis sans fin (16), supportant l'arbre de rotation (13, 13a, 13b, 13c, 13d, 13e) de sorte à pouvoir tourner librement par rapport au boîtier (11) ; chaque palier de roulement (19a, 19b) comprenant une bague intérieure (20a, 20b, 20c) et une bague extérieure ; et
un lubrifiant (24) agencé entre la face périphérique interne d'au moins une des bagues intérieures (20a, 20b, 20c) et la face périphérique externe de l'arbre de rotation (13, 13a, 13b, 13c, 13d, 13e) ;
**caractérisé en ce qu'**un premier palier de roulement (19a), agencé sur le côté d'extrémité avant de l'arbre de rotation (13, 13a, 13b, 13c, 13d, 13e), prenant en sandwich la roue à vis sans fin (16), est un roulement du type à une seule rangée de billes à gorges profondes; et
une partie dans la direction axiale de la face périphérique externe de l'arbre de rotation (13, 13a, 13b, 13c, 13d, 13e) comporte des parties concaves et convexes de détection du couple (28), agencées par alternance par rapport à la direction circonférentielle, et comportant des parties concaves et des parties convexes s'étendant respectivement dans la direction axiale, et par rapport à la direction axiale, une partie à grand diamètre (30, 30a, 30b, 30c, 30d), ayant un diamètre supérieur à celui des parties concaves et convexes de détection du couple (28), est agencée sur une partie adjacente à la face d'extrémité avant des parties concaves et convexes de détection du couple (28), et en ce qui concerne la bague intérieure (20a, 20b, 20c), constituant un deuxième palier de roulement (19b) qui est agencé sur le côté d'extrémité arrière de l'arbre de rotation (13, 13a, 13b, 13c, 13d, 13e), prenant en sandwich la roue à vis sans fin (16), seule une partie sur le côté d'extrémité avant par rapport à la direction axiale est ajustée de manière externe sur la partie à grand diamètre (30, 30a, 30b, 30c, 30d), l'état engagé entre la face périphérique interne de la bague intérieure (20a, 20b, 20c) et la partie à grand diamètre (30, 30a, 30b, 30c, 30d) constituant un ajustement avec jeu ;
un lubrifiant (24) étant agencé au moins entre la face périphérique interne de la bague intérieure (20a, 20b, 20c) du deuxième palier de roulement (19b) et la face périphérique externe de la partie à grand diamètre de l'arbre de rotation (13, 13a, 13b, 13c, 13d, 13e).

2. Dispositif de direction assistée électrique selon la revendication 1, dans lequel la face périphérique externe de la partie à grand diamètre (30, 30a, 30b, 30c, 30d) de l'arbre de rotation (13 , 13a, 13b, 13c, 13d, 13e) comporte une face comportant l'une quelconque des structures ci-dessous : plusieurs parties concaves (31), plusieurs rainures (32) s'étendant sur la direction axiale, au moins une rainure concave (33) s'étendant dans la direction circonférentielle, ou une combinaison de ces structures.

3. Dispositif de direction assistée électrique selon la revendication 1, dans lequel la face périphérique externe de la partie à grand diamètre (30, 30a, 30b, 30c, 30d) de l'arbre de rotation (13, 13a, 13b, 13c, 13d, 13e) comporte une surface de plateau.

4. Dispositif de direction assistée électrique selon la revendication 1, dans lequel, en ce qui concerne le lubrifiant (24) agencé entre la face périphérique interne de la bague intérieure (20a, 20b, 20c) du deuxième palier de roulement (19a, 19b) et la face périphérique externe de la partie à grand diamètre (30, 30a, 30b, 30c, 30d) de l'arbre de rotation (13, 13a, 13b, 13c, 13d, 13e) on utilise un lubrifiant (24) identique à celui utilisé pour la partie d'engrènement entre la vis sans fin (17) et la roue à vis sans fin (16).
